# EUROPEAN PATENT APPLICATION

(11) **EP 2 202 115 A1**
(43) Date of publication of application: **30.06.2010**
(21) Application number: 08842074.0
(22) Date of filing: 02.10.2008
(51) Int. Cl.: B60N 2/06

(54) **VEHICLE SEAT SLIDE DEVICE**

(30) Priority: 25.10.2007 JP 2007277489
(71) Applicant: Aisin Seiki Kabushiki Kaisha, Kariya-shi, Aichi 448-8650 (JP)
(72) Inventor: KOJIMA, Yasuhiro, Kariya-shi Aichi 448-8650 (JP); NIHONMATSU, Hideo, Kariya-shi Aichi 448-8605 (JP)
(74) Representative: TBK-Patent
(86) International application number: PCT/JP2008/067935
(87) International publication number: WO 2009/054246

(57) **Abstract**

A strange sound is deterred from being generated when an upper rail is slidden relative to a lower rail with a retainer being in contact with one or both of the rails.
A vehicle seat slide device 10 is provided with a lower rail 11, an upper rail 12, retainers 13 arranged between both rails 11, 12, and a plurality of rolling members (steel balls) rollably carried by the retainer 13 and rolled in contact with the both rails 11, 12. Each retainer 13 is composed of a retainer body 13d and protrusions 13a, 13b, 13c protruding from the retainer body 13d. These protrusions 13a, 13b, 13c and the retainer body 13d are bodily formed with a resin material. By providing the retainer 13 with the protrusions 13a, 13b, 13c, it results that the protrusions 13a, 13b, 13c necessarily contact the both rails 11, 12 whenever the retainer 13 and the both rails 11, 12 contact each other.

## Description

### TECHNOLOGICAL FIELD:

The present invention relates to a vehicle seat slide device.

### BACKGROUND ART:

Heretofore, as vehicle seat slide devices of this kind, there has been known one which is described in JP2005-263049 A.

This vehicle seat slide device is constructed to combine a lower rail fixed to a floor and an upper rail supporting a seat mutually slidably, so that the relative movement of the both rails through the sliding enables the seat to move slidably. The lower rail takes the form of an approximately U-letter and is provided with a pair of lower-side flange portions that are formed by protruding the upper ends of respective vertical wall portions inward and turning the upper ends down. Further, the upper rail takes the form of an approximately inversed U-letter and is provided with a pair of upper-side flange portions that are formed by protruding the lower ends of respective vertical wall portions outward and turning the lower ends up. Then, the both rails are assembled by combining the upper-side flange portions with hollow portions which are surrounded by the wall portions and the lower-side flange portions of the lower rail, and thus, a seat slide device taking an approximately box-like shape is configured by the lower rail and the upper rail.

Retainers are respectively arranged in clearances which are provided between the respective upper-side flange portions and the respective vertical walls of the lower rail. The retainer rollably carries a plurality of steel balls which roll in contact with the both rails. Further, the retainer is configured not to contact the both rails. Then, as the steel balls roll with the sliding of the both rails, the upper rail is smoothly slidable relative to the lower rail in the forward-rearward direction of the vehicle.

### DISCLOSURE OF THE INVENTION:

### PROBLEM TO BE SOLVED BY THE INVENTION:

A cause which brings about ricketiness between the both rails is made by setting the clearances between the both rails in which clearances the retainers are arranged, to be large as is the case of the seat slide device described in the aforementioned JP2005-263049 A, and therefore, it is desirable to set the clearances as small as possible. However, an anxiety arises in that the retainers are caused to contact one or both of the rails due to the dimensional tolerances in manufacturing the retainers, the lower rail, the upper rail and the like and the assembling errors or the like in assembling the both rails. Because the retainers are generally made of a metal such as iron or the like, it is feared that a strange sound is generated when the upper rail is slidden relative to the lower rail with the retainer being in contact with either rail.

Therefore, in the present invention, it is set as the technical problem to be solved to suppress the generation of a strange sound during the movement of an upper rail relative to a lower rail.

### MEASURES FOR SOLVING THE PROBLEMS:

To solve the foregoing technical problem, the feature of the invention described in Claim 1 resides in having a lower rail adapted to be fixed to a floor of a vehicle, an upper rail adapted to be fixed to a seat of the vehicle and assembled to be movable relative to the lower rail in a forward-rearward direction of the vehicle, a retainer arranged between the both rails and rotatably retaining a plurality of rolling members which rollably contact the both rails, and a protrusion provided at at least one part of parts facing the both rails on the retainer and being in contact with the rail facing thereto or being closer to the rail facing thereto than other parts.

The feature of the invention described in Claim 2 resides in that in Claim 1, the retainer is composed of a retainer body retaining the plurality of rolling members and the protrusion provided on the retainer body and that at least the protrusion is made of a resin material.

The feature of the invention described in Claim 3 resides in that in Claim 2, the retainer body is made of a metal.

The feature of the invention described in Claim 4 resides in that in Claim 2, the retainer body is made of a resin material.

The feature of the invention described in Claim 5 resides in that in any one of Claims 1-4, the protrusion is configured by a protruding streak which extends in the moving direction of the upper rail relative to the lower rail.

### EFFECTS OF THE INVENTION:

According to the invention described in Claim 1, by providing the protrusion on the retainer, it results that the protrusion necessarily contacts the rail when the retainer comes into contact with the rail. Thus, it is possible to control the contact state such as contact area, contact direction and the like between the retainer and each rail.

According to the invention described in Claim 2, since at least the protrusion provided on the retainer is made of a resin material, an elastic cushion action inherent in the resin material makes it possible to effectively suppress the generation of a strange sound. Further, since the resin material has a self-lubrication capability, the sliding resistance can be reduced in the seat slide device.

According to the invention described in Claim 3, since the retainer body is a metal, the rigidity of the retainer is ensured to be high.

According to the invention described in Claim 4, since it becomes possible to form the retainer body and the protrusion to be bodily, it can be realized to ease the manufacturing.

According to the invention described in Claim 5, since the protrusion is configured by a protruding streak which extends in the moving direction of the upper rail relative to the lower rail, it is possible to make the whole of the protrusion contact the rail stably, and it is possible to suppress the abrasion of the protrusion. Further, in assembling the vehicle seat slide device, the protruding streak can be used as a guide to insert the retainer into the rails, so that the assembling capability can be enhanced.

### BRIEF DESCRIPTION OF THE DRAWINGS:

[Figure 1] is a perspective view of a vehicle seat which is equipped with a vehicle seat slide device according to the present invention.
[Figure 2] is a perspective view in a disassembled state of the vehicle seat slide device according to the present invention.
[Figure 3] is a sectional view of the vehicle seat slide device shown in Figure 2.
[Figure 4] is an enlarged view of the retainers 13 in the perspective view in a disassembled state of the vehicle seat slide device shown in Figure 2.
[Figure 5] is a view of retainers in which the protrusions shown in Figure 4 are each formed to be a quadrangular pyramid.

### DESCRIPTION OF REFERENCE SYMBOLS:

10...vehicle seat slide device, 11...lower rail, 12...upper rail, 13...retainer, 13a...retainer protrusion, 13b...retainer protrusion, 13c... retainer protrusion, 13d...retainer body, 14...rolling members (steel balls)

### PEEFERRED EMBODIMENTS FOR PRACTICING THE INVENTION:

Hereafter, a vehicle seat slide device in an embodiment according to the present invention will be described with reference to the drawings.

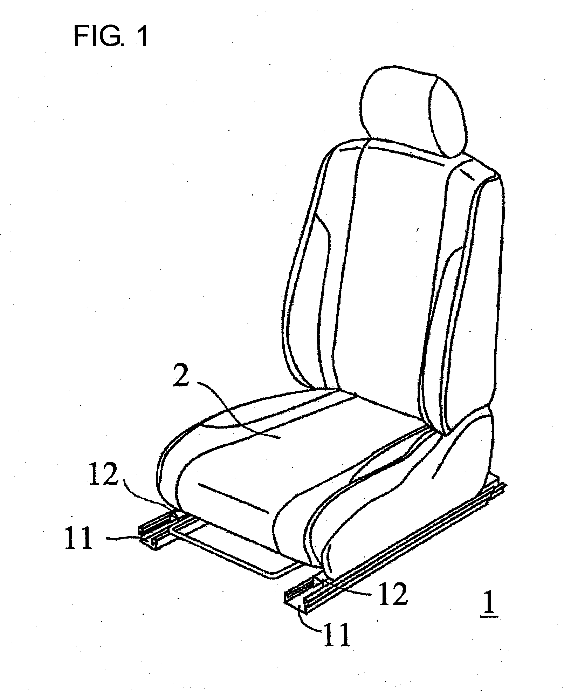

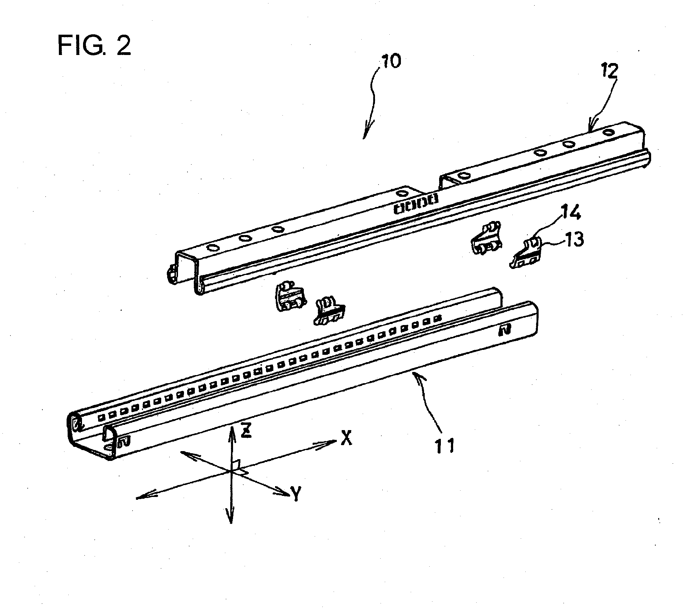

As shown in Figures 1, 2 and 3, the seat slide device 10 is provided with a pair of left and right lower rails 11 fixed to the upper surface of a vehicle floor 1 and a pair of left and right upper rails 12 fixed to the lower surface of a vehicle seat 2 and mounted to be slidable relative to the respective lower rails 11. Thus, the upper rails 12 are movable a predetermined amount through sliding relative to the lower rails 11 in the forward-rearward direction X shown in Figure 2 of a vehicle.

Next, the detailed construction of the seat slide device 10 will be described.

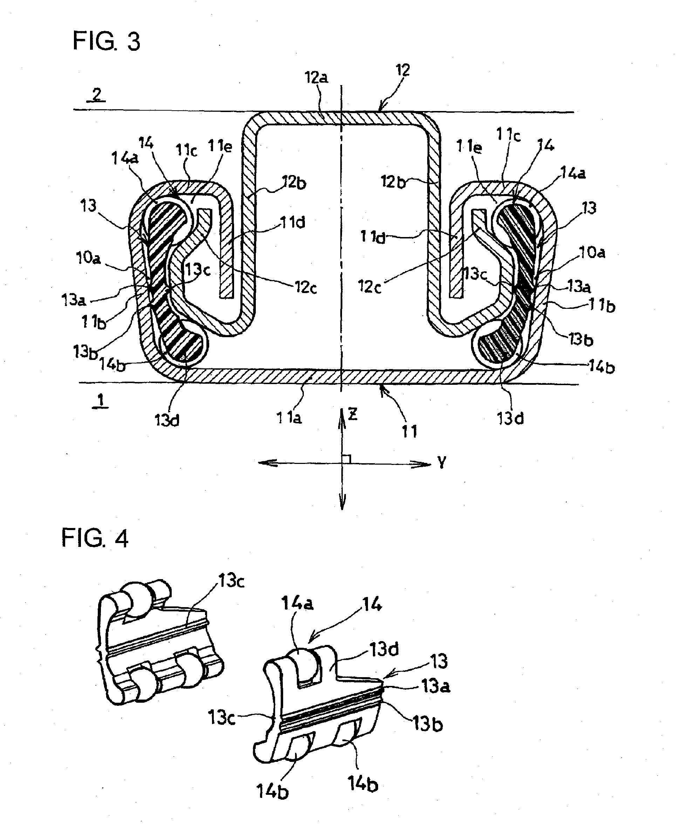

The lower rail 11 is configured by bending and forming a piece of plate material. The lower rail 11 extends in the forward-rearward direction X of the vehicle and, as shown in Figure 3, has a base portion 11 a taking a flat shape and a pair of left and right vertical walls 11 b bent upward from both ends thereof, so that as a whole, the cross section thereof takes an approximately U-letter shape which is symmetrical with respect to a center axis Z extending in the vertical direction of the vehicle. Further, the respective vertical walls 11 b are provided with upper end portions 11c formed by bending the upper ends thereof inward and a pair of flange portions 11 d formed by turning the upper end portions 11 c down from the insides of the same. The vertical walls 11 b and the flange portions 11 d are formed to be approximately parallel, and groove portions 11e are provided therebetween.

The upper rail 12 is formed by bending and forming a piece of plate material. The upper rail 12 extends in the forward-rearward direction X of the vehicle and, as shown in Figure 3, has a base portion 12a taking a flat shape and a pair of left and right vertical walls 12b provided at both ends thereof and extended downward, so that as a whole, the cross section thereof takes an approximately inverted U-letter shape which is symmetrical with respect to the center axis Z extending in the vertical direction of the vehicle. Further, the respective vertical walls 12b are bent outward at lower ends thereof and are turned up from the outsides thereof. That is, at the vertical walls 12b, there are formed a pair of left and right flange portions 12c at which the turned end portions are expanded outward.

Here, as shown in Figure 3, the upper ends of the respective flange portions 12c of the upper rail 12 are combined with the respective groove portions 11 e of the lower rail 11. Between the both rails 11 and 12, there are arranged a plurality of steel balls (rolling members) 14 which roll with the sliding of the both rails 11, 12, and each ball 14 is in contact with the both rails 11, 12. As shown in Figure 3, steel balls 14a of the plurality of steel balls 14 are arranged to be rollable between upper-end outer-side portions of the flange portions 12c of the upper rail 12 and corner portions which are between the vertical walls 11 b and the upper end portions 11c of the lower rail 11. Steel balls 14b of the plurality of steel balls 14 are arranged to be rollable between lower-end outer-side portions of the upper-side flange portions 12c of the upper rail 12 and corner portions which are between the base portion 11a and the vertical walls 11 b of the lower rail 11. Thus, when the upper rail 12 is slidden relative to the lower rail 11 in the forward-rearward direction X of the vehicle, the respective steel balls 14 are rolled. Therefore, with such actions of the respective steel balls 14, the upper rail 12 smoothly slides relative to the lower rail 11 in the forward-rearward direction X of the vehicle.

As mentioned earlier, the upper ends of the respective flange portions 12c of the upper rail 12 are combined with the respective groove portions 11e of the lower rail 11. Thus, respective clearances 10a are provided between the respective vertical wall portions 11 b of the lower rail 11 and the respective flange portions 12c of the upper rail 12, and retainers 13 are respectively arranged in the respective clearances 10a. The retainer 13 couples the steel ball 14a and the steel balls 14b to fixedly hold the relative positional relation of the both members and retain the both members rollable. That is, the retainer 13 prevents the plurality of steel balls 14 from dispersing with sliding of the both rails 11, 12.

The retainer 13 is composed of a retainer body 13d and protrusions 13a, 13b, 13c which protrude from the retainer body 13d. The retainer body will be described first. The retainer body 13d is made of a resin, has a curved, plate-like shape and is arranged upright in each clearance 10a. Further, the thickness of the retainer body 13d is set to be thinner than the space between each vertical wall portion 11 b of the lower rail 11 and each flange portion 12c of the upper rail 12, so that the retainer body 13d does not contact the both rails 11, 12.

Further, the protrusions 13a, 13b which contact each vertical wall portion 11 b of the lower rail 11 are protruded from a part of the retainer body 13d facing each such vertical wall portion 11 b, and a protrusion 13c which contacts each flange portion 12c of the upper rail 12 is protruded from another part of the retainer body 13d facing each such flange portion 12c. These protrusions 13a, 13b, 13c, together with the retainer body 13d, are bodily formed with a resin material.

As shown in Figure 4, the protrusions 13a, 13b, 13c are configured by protruding streaks which extend in the forward-rearward direction X of the vehicle, that is, in the moving direction of the upper rail 12 relative to the lower rail 11, and tips of the protrusions 13a, 13b, 13c facing the counterpart of the both rails 11, 12 take the form of an arc. Thus, the protrusions 13a, 13b, 13c of each retainer 13 and the both rails 11, 12 are placed under line contacts.

In this way, by providing the retainer 13 with the protrusions 13a, 13b and 13c, it results that whenever the retainer 13 contacts the both rails 11, 12, it necessarily contacts the both rails 11, 12 at the protrusions 13a, 13b and 13c. Thus, it is possible to control the contact state such as contact area, contact direction and the like between the retainer 13 and the both rails 11, 12, and it is possible to appropriately suppress the generation of a strange sound caused by sliding the both rails 11, 12 relatively.

Further, according to the present embodiment, there can also be attained the following effects.

• Because of being more elastic than a metal constituting the both rails 11, 12, the resin constituting the protrusions 13a, 13b, 13c of the retainers 13 has a function as cushion and is high in self-lubrication capability. Thus, it is possible to make the sliding resistance as small as possible between the both members in the sliding operation in the forward-rearward direction X of the vehicle, and it is possible to more effectively suppress the generation of a strange sound caused by sliding the both rails 11, 12 relatively.

• Since it becomes possible to configure the retainer body 13d and the protrusions 13a, 13b, 13c bodily with a resin material, it can be realized to ease the manufacturing.

• Since the protrusions 13a, 13b, 13c are configured by the protruding streaks which extend in the moving direction of the upper rail 12 relative to the lower rail 11, it is possible to make the whole of the protrusions contact the both rails 11, 12 stably, and it is possible to suppress the abrasion of the protrusions 13a, 13b, 13c. Further, in assembling the vehicle seat slide device 10, the protrusions are used as guides to insert the retainers into the both rails 11, 12, so that the assembling capability can be enhanced.

The foregoing embodiment may be modified as follows.

• Although the foregoing embodiment is constructed to make the protrusions 13a, 13b, 13c of the retainer 13 contact the both rails 11, 12, the protrusions 13a, 13b, 13c are not necessarily required to contact the both rails 11, 12 and may be configured to be closer than other parts of the retainer body 13d. Even where so modified, the provision of the protrusions 13a, 13b, 13c on the retainer body 13d ensures that whenever the retainer body 13d is caused to contact the both rails 11, 12 due to errors and the like in assembling the both rails 11, 12, the protrusions 13a, 13b, 13c necessarily contact the both rails 11, 12, so that the effects equal to those in the foregoing embodiment can be obtained.

• Although in the foregoing embodiment, the protrusions (13a-13c) of the retainer are protruded as three protrusions 13a, 13b, 13c, it is sufficient that protrusions (13a-13c) are protruded to provide the parts facing the both rails 11, 12 with protrusions one for each part (protrusions 13a, 13c only or protrusions 13b, 13c). Further, it is also sufficient that the protrusion (13a-13c) is protruded at a part which faces either the lower rail 11 or the upper rail 12 (protrusion 13a only, 13b only or 13c only). Further, the positions of the protrusions (13a-13c) are not limited in particular. The reason is because even in the case that the protrusion (13a-13c) is provided only on one side facing either of the rails (11, 12), the generation of a strange sound which is caused by relatively sliding the both rails 11, 12 can be suppressed in comparison with the prior art device.

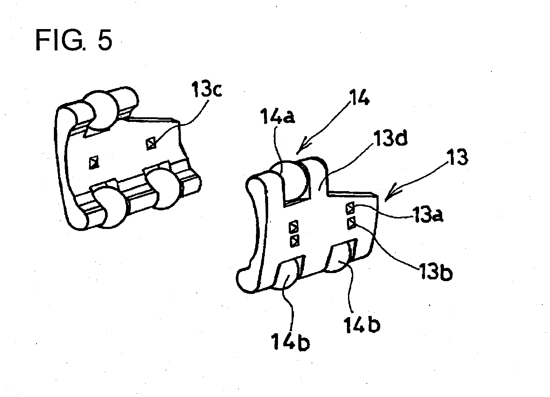

• Although in the foregoing embodiment, the protrusions 13, 13b, 13c are configured as protruding streaks extending in the moving direction of the upper rail 12 relative to the lower rail 11, they may be a plurality of cones or pyramids which are arranged in the moving direction of the upper rail 12 relative to the lower rail 11. As shown in Figure 5, one example is given, wherein quadrangle pyramids are arranged one at around each of the opposite end portions of the retainer 13. Thus, it is possible to make the area of the retainer 13 contacting the both rails 11, 12 smaller than that in the case of the protrusions 13a, 13b, 13c being the protruding streaks, and hence, it is possible to further reduce the sliding resistance between the both members in the sliding operation in the forward-rearward direction X of the vehicle.

• Although in the foregoing embodiment, the protrusions 13a, 13b, 13c and the retainer body 13d are solid-casted with a resin material, the protrusions 13a, 13b, 13c only may be made of a resin, whereas the retainer body 13d may be made of a metal. Thus, a high rigidity can be secured with the retainer 13.

• Although the sliding only in the forward-rearward direction of the vehicle is considered in the foregoing embodiment, the direction of the both rails 11, 12 may not necessarily be in the forward-rearward direction of the vehicle. In that case, the sliding direction of the both rails 11, 12 should be regarded as the X-direction.

### INDUSTRIAL APPLICABILITY:

The vehicle seat slide device according to the present invention is suitable for use in a vehicle seat slide device which is provided with a lower rail secured to a floor of a vehicle, an upper rail assembled with the lower rail to be movable in the forward-rearward direction of a vehicle, and a retainer rotatably retaining a plurality of rolling members which are rolled with movement of the upper rail while rollably contacting the both rails.

## Claims

1. A vehicle seat slide device comprising:
a lower rail adapted to be fixed to a floor of a vehicle;
an upper rail adapted to be fixed to a seat of the vehicle and assembled to be movable relative to the lower rail in a forward-rearward direction of the vehicle;
a retainer arranged between the both rails and rotatably retaining a plurality of rolling members which rollably contact the both rails; and
a protrusion provided at at least one part of parts facing the both rails on the retainer and being in contact with the rail facing thereto or being closer to the rail facing thereto than other parts.

2. The vehicle seat slide device according to Claim 1, **characterized in that** the retainer is composed of a retainer body retaining the plurality of rolling members and the protrusion provided on the retainer body and that at least the protrusion is made of a resin material.

3. The vehicle seat slide device according to Claim 2, **characterized in that** the retainer body is made of a metal.

4. The vehicle seat slide device according to Claim 2, **characterized in that** the retainer body is made of a resin material.

5. The vehicle seat slide device according to any one of Claims 1 to 4, **characterized in that** the protrusion is configured by a protruding streak which extends in the moving direction of the upper rail relative to the lower rail.

## Amended claims

### Amended claims under Art. 19.1 PCT

1. (Amended) A vehicle seat slide device comprising:
a lower rail adapted to be fixed to a floor of a vehicle;
an upper rail adapted to be fixed to a seat of the vehicle and assembled to be movable relative to the lower rail in a forward-rearward direction of the vehicle;
a plurality of rolling members arranged between the lower rail and the upper rail and rollably contacting both of the lower rail and the upper rail:
a retainer arranged between the lower rail and the upper rail and rollably retaining the plurality of rolling members;
a first protrusion provided at a part facing the lower rail on the retainer and being in contact with the lower rail or being closer to the lower rail than other parts; and
a second protrusion provided at a part facing the upper rail on the retainer and being in contact with the upper rail or being closer to the upper rail than other parts.

2. The vehicle seat slide device according to Claim 1, **characterized in that** the retainer is composed of a retainer body retaining the plurality of rolling members and the protrusions provided on the retainer body and that at least the protrusions are made of a resin material.

3. The vehicle seat slide device according to Claim 2, **characterized in that** the retainer body is made of a metal.

4. The vehicle seat slide device according to Claim 2, **characterized in that** the retainer body is made of a resin material.

5. The vehicle seat slide device according to any one of Claims 1 to 4,
**characterized in that** the protrusions are configured by protruding streaks which extend in the moving direction of the upper rail relative to the lower rail.

6. (Added) The vehicle seat slide device according to Claim 1, wherein the plurality of rolling members are arranged to be spaced in a vertical direction of the vehicle.
